(19) Europäisches Patentamt
European Patent Office
Office européen des brevets

(11) Veröffentlichungsnummer: **0 088 920**
**B1**

(12) # EUROPÄISCHE PATENTSCHRIFT

(45) Veröffentlichungstag der Patentschrift: **15.01.86**

(21) Anmeldenummer: **83101840.3**

(22) Anmeldetag: **25.02.83**

(51) Int. Cl.⁴: **C 09 B 57/04** // C09D11/02, C07D487/04, C09D1/00, C08K5/34

(54) **Isoindolinfarbstoffe und deren Verwendung.**

(30) Priorität: **06.03.82 DE 3208218**

(43) Veröffentlichungstag der Anmeldung: **21.09.83 Patentblatt 83/38**

(45) Bekanntmachung des Hinweises auf die Patenterteilung: **15.01.86 Patentblatt 86/3**

(84) Benannte Vertragsstaaten: **CH DE FR GB IT LI**

(56) Entgegenhaltungen:
**FR-A-2 135 259**
**FR-A-2 344 603**
**FR-A-2 431 495**
**GB-A-1 187 667**

**CHEMICAL ABSTRACTS, Band 45, Nr. 22, 25. November 1951, Spalten 10247,10248, Columbus, Ohio, US A. DE CAT et al.: "Heterocyclic derivatives of pyrimidobenzimidazoles"**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch- Strasse 38, D-6700 Ludwigshafen (DE)**

(72) Erfinder: **Lotsch, Wolfgang, Dr., Stettiner Strasse 32, D-6711 Beindersheim (DE)**
Erfinder: **Kemper, Reinhard, Dr., Vierheimer Weg 41, D-6900 Heidelberg (DE)**
Erfinder: **Schefczik, Ernst, Dr., Dubliner Strasse 7, D-6700 Ludwigshafen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 088 920 B1

LIBER, STOCKHOLM 1986

**Beschreibung**

Die Erfindung betrifft neue Isoindolinfarbstoffe und deren Verwendung.

In der GB-A 1 187 667 werden Isoindolinverbindungen der allgemeinen Formel

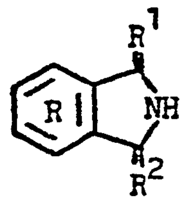

beschrieben, in der der Ring R noch weiter substituiert sein kann und $R^1$ und $R^2$ für bivalente Reste von Verbindungen stehen, die zwei aktive Wasserstoffatome an einem Kohlenstoff oder Stickstoffatom tragen. Nach den Angaben in der Beschreibung kommen für $R^1$ neben weiteren Gruppen auch solche der Formel NC-C-A in Betracht, worin A u.a. Carbonamidogruppe oder ein heterocyclischer Rest sein kann.

Weiterhin können $R^1$ und $R^2$ auch Reste der allgemeinen Formel

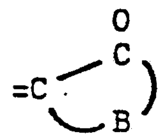

sein, in der B für die Ergänzung zu 5- oder 6-gliedrigen carbo- oder heterocyclischen Ringen steht. In der Beschreibung werden eine Reihe heterocyclischer Ketomethylenverbindungen genannt, von den Systemen mit mehr als einem Ring jedoch nur 2,4-Dioxo-1,2,3,4-tetrahydrochinolin, Oxindolin und 3-Hydroxythionaphthen.

Nach den Angaben in der Beschreibung sind die Farbstoffe der GB-A hervorragend zum Färben und Bedrucken von synthetischen Fasermaterialien geeignet. Einige der Farbstoffe sollen auch als Pigmente von Interesse sein. In den Beispielen der GB-A wird nur im Falle des Umsetzungsproduktes von 1,3-Diiminoisoindolin mit Cyanacetamid und Barbitursäure (Beisp. 59) angegeben, daß ein kornweiches Pulver erhalten wurde, das bei der Anwendung im Lack klare gelbe Überzüge nit guten Echtheiten liefert. Bei allen anderen Farbstoffen wird - soweit eine Anwendung genannt wirdnur das Färben von synthetischem Fasermaterial angegeben.

Angaben mit welchem bivalenten Resten $R^1$ und $R^2$ die Verbindungen der GB-A pigmente sind oder sein könnten, sind der GB-A nicht zu entnehmen.

Die neuen Isoindolinfarbstoffe haben die allgemeine Formel

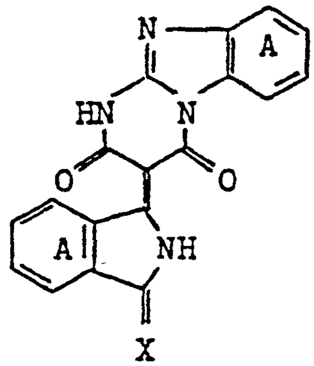

(I)

in der X für einen Rest der Formel

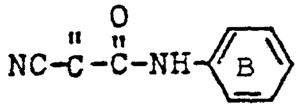,

(II)

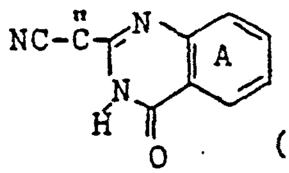

(III)

oder

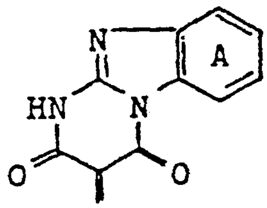

(IV)

steht und die Ringe A und B unsubstituiert oder durch 1 oder 2 Chlor, Brom, Methyl, Ethyl, Methoxy und/oder Ethoxy substituiert sind.

Die Farbstoffe der Formel (I) geben in Lacken, Druckfarben und Kunststoffen Färbungen in braunen Farbtönen bzw. wenn R Wasserstoff oder Alkyl ist, Färbungen in orange Tönen. Die Färbungen weisen gute Licht- und Migrationsechtheiten auf. Einige Farbstoffe zeichnen sich durch hervorragende Wetterechtheit aus und eignen sich vorzüglich zur Pigmentierung von Automobildecklacken.

Die Zahl der Substituenten an den Ringen A und B ist vorzugsweise 0 oder 1.

Von den Verbindungen der Formel (I sind aus coloristischen und anwendungstechnischen Gründen solche bevorzugt, bei denen die Ringe A nicht substituiert sind und der Ring B durch 1 oder 2 Chlor und/oder Methyl, insbesondere durch Chlor substituiert ist.

Ganz besonders ist der Farbstoff der Formel VI bevorzugt:

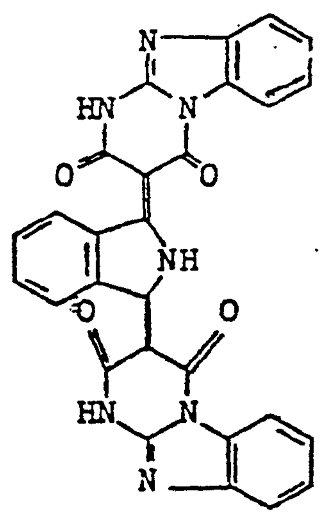

(VI)

Die Farbstoffe der Formel (I) werden nach an sich bekannten Verfahren durch stufenweise Kondensation von 1,3-Di-imino-isoindolin mit den entsprechenden CH-aciden Verbindungen erhalten.

Zur Herstellung der Farbstoffe (I), in denen X für Reste der Formeln II oder III steht, wird 1,3-Diiminoisoindo-lin mit einer Verbindung der Formel

$NC-CR_2-R^1$ (VIII),

in der $R^1$ für

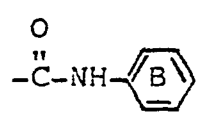

oder einen 2-Chinazolylrest steht, im Verhältnis 1:1 Mol kondensiert und das Umsetzungsprodukt (= Halbkondensationsprodukt) der Formel

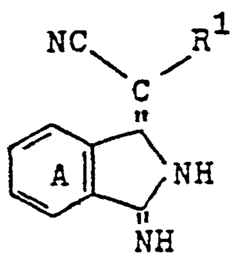

(IX)

mit 1 Mol der Verbindung

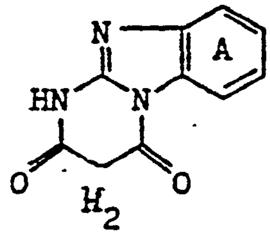

(X)

kondensiert, wobei in den Formeln R, A und B die oben angegebene Bedeutung haben.

Farbstoffe der Formel I, in denen X für einen Rest der Formel IV steht, erhält man durch Umsetzen von 1,3-Diiminoisoindolin mit 2 Mol der Verbindung (X).

Die Kondensation des Diiminoisoindolins mit den cyanmethylenaktiven Verbindungen der Formel VIII zu den Halbkondensationsprodukten der Formel IX kann in Wasser oder in einem organischen Lösungs- oder Verdünnungsmittel, beispielsweise einem aliphatischen Alkohol mit 1 bis 4 C-Atomen, wie Methanol, Ethanol, Isopropanol, Butanol, ferner Glykolen oder Glykolethern, offenkettigen oder cyclischen Amiden, wie Dimethylformamid, Dimethylacetamid oder N-Methylpyrrolidon oder in Mischungen der vorgenannten Lösungsmittel erfolgen. Ein geringer Überschuß an Diiminoisoindolin kann vorteilhaft sein. Die Menge an Lösungs- und Verdünnungsmittel ist an sich unkritisch und wird bestimmt durch die Rührbarkeit bzw. Mischbarkeit des Reaktionsansatzes. Die Umsetzung erfolgt in der Regel bei Temperaturen unterhalb von 100°C.

Die Biskondensation des Diiminoisoindolins mit Verbindungen der Formel X oder die Kondensation der Halbkondensationsprodukte der Formel IX mit den CH-aciden Verbindungen der Formel X erfolgt in aliphatischen Mono- oder Dicarbonsäuren, insbesondere in aliphatischen Monocarbonsäuren wie Essigsäure oder Propionsäure bei Temperaturen zwischen 50 und 150°C.

Sowohl die Halbkondensationsprodukte der Formel IX als auch die Pigmente der Formel I fallen in der Ritze aus und können durch Abfiltrieren und gegebenenfalls durch Waschen mit organischen Lösungsmitteln in reiner Form isoliert werden.

Durch geeignete Reaktionsführung gelingt es in den Fällen, in denen X für Reste der Formeln II oder III steht, auch beide Reaktionsschritte ohne Zwischenisolierung der Halbkondensationsprodukte der Formel IX im gleichen Reaktionsgefäß durchzuführen.

Die erhaltenen Rohprodukte können im Allgemeinen direkt so wie sie bei der Umsetzung anfallen, als Pigmente verwendet werden. Sie können aber auch nach an sich bekannten Formierungsverfahren in für ihren vorgesehenen Verwendungszweck optimale Pigmentformen überführt werden.

Die Verbindung der Formel X, die 2,4-Dioxo-tetrahydro-pyrimido-[1,2-a]-benzimidazolverbindungen sind, können aus 2-Aminobenzimidazol und Malonsäurederivaten hergestellt werden.

Die folgenden Beispiele sollen die Erfindung zusätzlich erläutern. Die im folgenden angegebenen Teile und prozentangaben beziehen sich auf das Gewicht.

**Beispiel 1**

a) 20,1 Teile der Verbindung X (Ring A unsubstituiert) und 10,4 Teile des Monoadduktes von Ethylenglykol an 1,3-Diiminoisoindolin wurden in 250 Teilen Eisessig 3 Stunden bei Siedetemperatur gerührt. Nach dem Abkühlen wurde filtriert, die Fällung zunächst mit Eisessig, dann mit Methanol gewaschen und getrocknet.

Ausbeute: 22 Teile Farbstoff der Formel

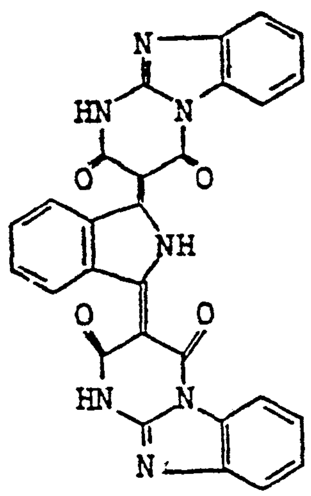

(VI)

in Form eines braunen Pulvers. Schmp. > 360°C.

Der Farbstoff kann direkt zum Pigmentieren von Lacken, Druckfarben und Kunststoffen verwendet werden. Es wurden sehr farbstarke braune Färbungen erhalten, die sehr gute Licht- und Überlackierechtheiten aufweisen.

10 Teile des nach a) erhaltenen Farbstoffs wurden in 100 Teilen Dimethylformamid 3 Stunden bei 130°C gerührt. Nach dem Abkühlen und Isolieren wurden 9 Teile Farbstoff in einer Pigmentform erhalten, die sehr farbstarke Braunfärbungen mit verbesserter Lichtechtheit liefert.

**Beispiele 2 bis 5**

Es wurden die in der Tabelle I angegebenen Verbindungen Xa

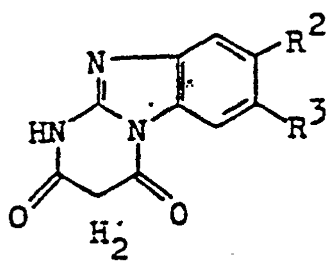

(Xa)

nach den Angaben des Beispiels Ia) mit 1,3-Diiminoisoindo-lin umgesetzt. Es wurden Verbindungen der Formel XI erhälten.

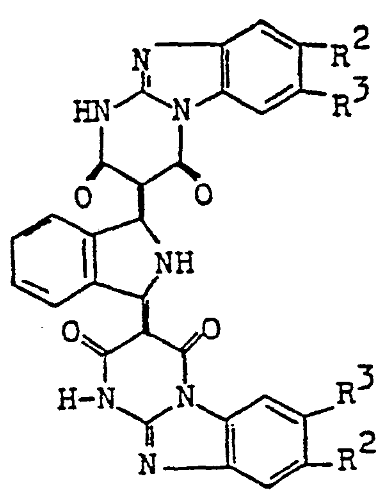

(XI) ,

**Tabelle I**

| Beisp. | (Xa) bzw. $R^2$ | (XI) $R^3$ | Farbton der Färbung | Schmp. [°C] |
|---|---|---|---|---|
| 2 | Gemisch aus | | | |
| | $-CH_3$ | $-H$ | braun | > 360 |
| | $-H$ | $-CH_3$ | | |
| 3 | Gemisch aus | | | |
| | $-Cl$ | $-H$ | braun | > 360 |
| | $-H$ | $-Cl$ | | |
| 4 | $-Cl$ | $-Cl$ | braun | > 360 |
| 5 | Gemisch aus | | | |
| | $-OCH_3$ | $-H$ | braun | > 360 |
| | $-H$ | $-OCH_3$ | | |

**Beispiel 6**

16 Teile des 1:1 Umsetzungsproduktes von 1,3-Diiminoiso-indolin und 2-Cyanmethylchinazolon wurden mit 10 Teilen der Verbindung Xa) $H^2 = H^3 = H$ in 250 Teilen Eisessig 3 Stunden bei Siedetemperatur gerührt. Nach dem Abkühlen wurde filtriert, der Rückstand mit Eisessig und Methanol gewaschen und getrocknet.

Ausbeute: 20 Teile Farbstoff der Formel

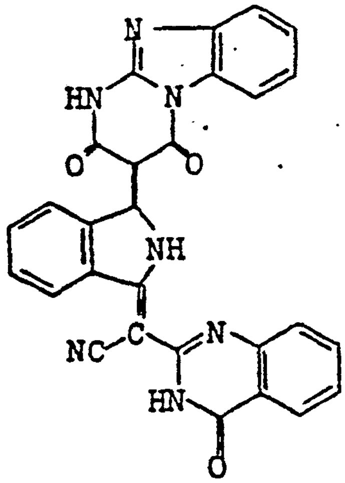

(XII),

in Form eines braunen Pulvers. Schmp. > 360°C. Der Farbstoff gibt im Lack, in Druckfarben und Kunststoffen farbstarke rotbraune Färbungen, die gute Licht- und Überlackierechtheit zeigen.

**Beispiele 7 bis 16**

1 : 1 Umsetzungsprodukte von 1,3-Diiminoisoindolin und Verbindungen der Formel $R^1$-$CH_2$-CN (VIII) wurden entsprechend den Angaben,des Beispiels 6 mit Verbindungen der Formel Xa umgesetzt. Nach dem Isolieren wurden Verbindungen der Formel XIII

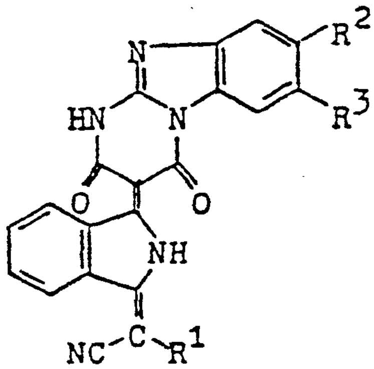

(XIII)

erhalten.

Die Bedeutung von $R^1$, $R^2$ und $R^3$ ist in der Tabelle angegeben. In der Tabelle ist außerdem der mit dem Farbstoff im Lack erhaltene Farbton und der Schmp. des Farbstoffs angegeben.

Tabelle II

| Beisp. | $R^1$ | $R^2$ | $R^3$ | Farbton | Schmp. [°C] |
|---|---|---|---|---|---|
| 7 | 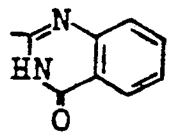 | Gemisch aus<br>$-CH_3$<br>$-H$ | <br>$-H$<br>$-CH_3$ | braun | > 360 |
| 8 | " | Gemisch aus<br>$-OCH_3$<br>$-H$ | <br>$-H$<br>$-OCH_3$ | braun | > 360 |
| 9 | " | $-Cl$ | $-Cl$ | braun | > 360 |
| 10 | 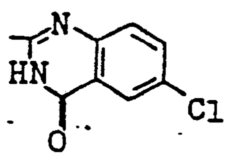 | $-H$ | $-H$ | braun | > 360 |
| 11 | 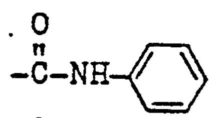 | $-H$ | $-H$ | braun | > 360 |
| 12 | 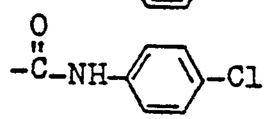 | $-H$ | $-H$ | braun | > 360 |
| 13 | 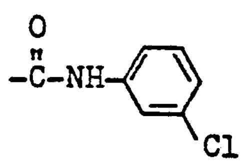 | $-H$ | $-H$ | braun | > 360 |
| 14 | 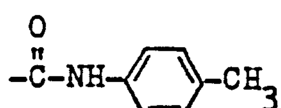 | $-H$ | $-H$ | braun | > 360 |
| 15 | 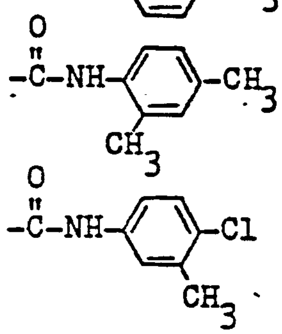 | $-H$ | $-H$ | braun | > 360 |
| 16 | | $-H$ | $-H$ | braun | > 360 |

**Anwendungsbeispiele**

a) Lack

10 Teile des nach Beispiel 1 erhaltenen Farbstoffes und 95 Teile Einbrennlackmischung, die 70 % Kokosalkydharz (60 fig in Xylol gelöst) und 30 X Melaminharz (ungefähr 55 %ig gelöst in Butanol/Xylol) enthält, werden in einem Attritor angerieben. Nach dem Auftragen und einer Einbrennzeit von 30 Minuten bei 120° C werden braune Volltonlackierungen mit guter Licht- und Überspritzechtheit erhalten. Durch Zumischen von Titandioxid werden braune Weigaufhellungen erhalten.

Verwendet man die in den Beispielen 2 bis 16 beschriebenen Farbstoffe, so werden Lackierungen in orange bis braunen Farbtönen und ähnlichen Eigenschaften erhalten.

b) Kunststoff

0,5 Teile des nach Beispiel 1 erhaltenen Farbstoffs werden auf 100 Teile Polystyrolgranulat (Standard-Marke) aufgetrommelt. Das angefärbte Granulat wird durch Extrudieren homogenisiert (190 bis 195° C). Man erhält braune Extrudate, deren Färbung gute Lichtechtheit aufweist.

Verwendet man Mischungen aus 0,5 Teilen Farbstoff und 1 Teil Titandioxid, so erhält man deckende, braune Färbungen.

Verwendet man die Pigmentfarbstoffe, die nach den Beispielen 2 bis 16 erhalten werden, so erhält man analoge Färbungen.

c) Druckfarbe

8 Teile des nach Beispiel 1 erhaltenen Pigmentfarbstoffes, 40 Teile eines mit Phenol/Formaldehyd modifizierten Kolophoniumharzes und 55 bis 65 Teile Toluol werden in einem Dispergieraggregat innig vermischt. Man erhält eine braune Toluol-Tiefdruckfarbe. Die mit dieser Farbe erhaltenen Drucke weisen gute Lichtechtheit auf.

**Patentansprüche**

1. Isoindolinfarbstoffe der Formel

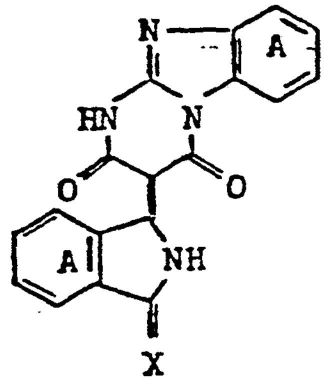

in der X für einen Rest der Formel

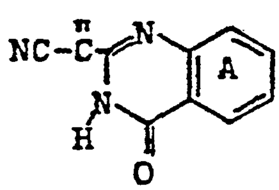

,

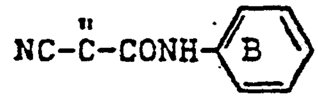

oder

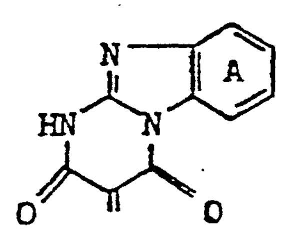

steht und die Ringe A und B unsubstituiert oder durch 1 oder 2 Chlor, Brom, Methyl, Ethyl, Methoxy und/oder Ethoxy substituiert sind.

2. Isoindolinfarbstoffe gemäß Anspruch 1, dadurch gekennzeichnet, daß die Ringe A unsubstituiert sind.

3. Isoindolinfarbstoffe gemäß Anspruch 1 oder 2, dadurch gekennzeichnet, daß in der Formel X für einen Rest der Formel

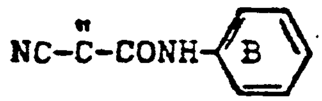

steht, in der der phenylrest B durch 1 oder 2 Chlor oder Methyl substituiert ist und wobei im Falle von 2 Substituenten diese gleich oder verschieden sein können.

4. Isoindolinfarbstoffe gemäß Anspruch 1, gekennzeichnet durch die Formeln

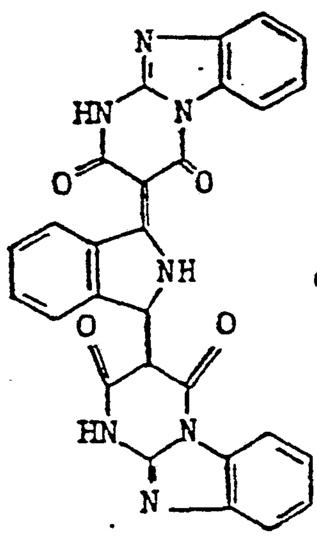

oder

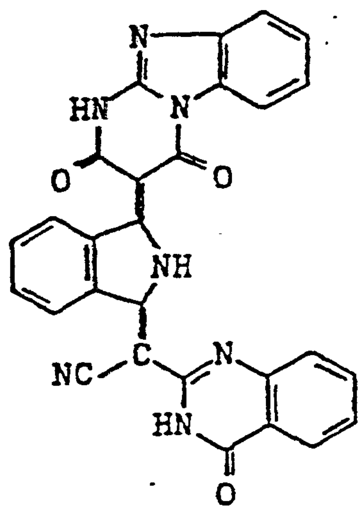

5. Isoindolin-farbstoffe gemäß Anspruch 1, gekennzeichnet durch die Formel

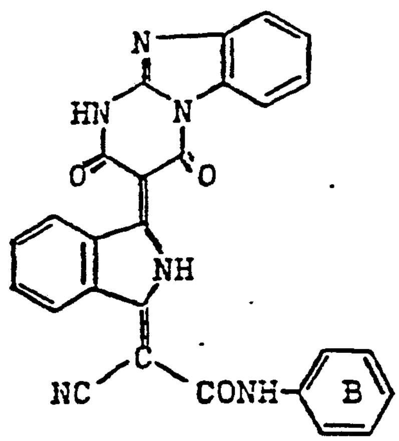

in der der Ring B durch ein Chlor substituiert ist.

6. Isoindolin-farbstoff gemäß Anspruch 1, gekennzeichnet durch die Formel

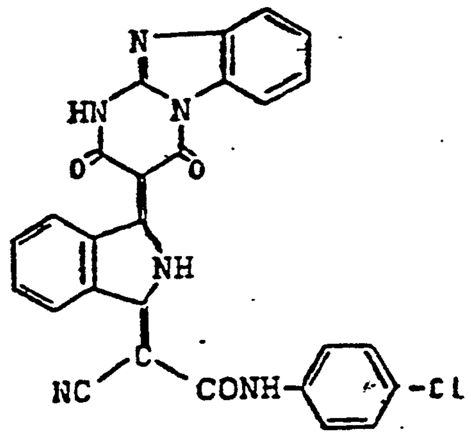

7. Verwendung der Isoindolinfarbstoffe gemäß den Ansprüchen 1 bis 6 zum Färben von Lacken, Druckfarben und Kunststoffen.

## Claims

1. An isoindoline dye of the formula

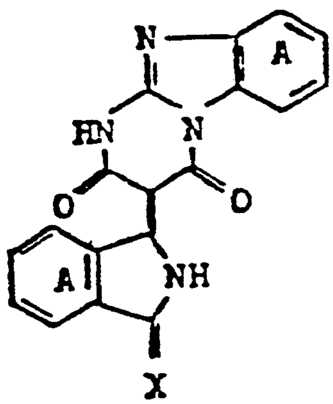

,

where X is a radical of the formula

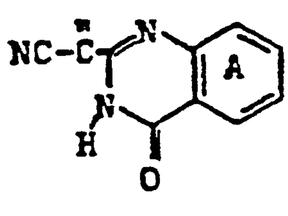

,

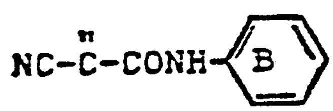

or

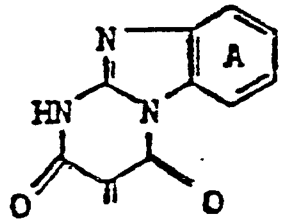

and the rings A and B are unsubstituted or mono- or disubstituted by chlorine, bromine, methyl, methoxy and/or ethoxy.

2. An isoindoline dye as claimed in claim 1, wherein the rings A are unsubstituted.

3. An isoindoline dye as claimed in claim 1 or 2, wherein, in the formula, X is a radical of the formula

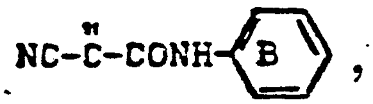

where the phenyl radical B is mono- or disubstituted by chlorine or methyl, and, if there are 2 substituents, they may be identical or different.

4. An isoindoline dye as claimed in claim 1, of the formula

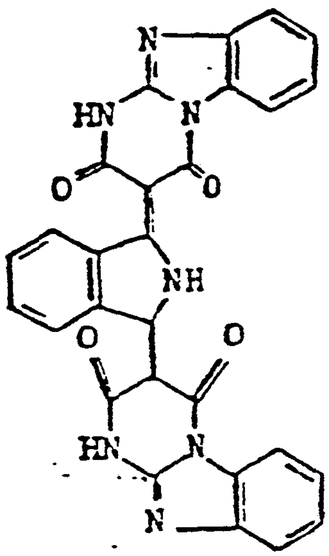

or

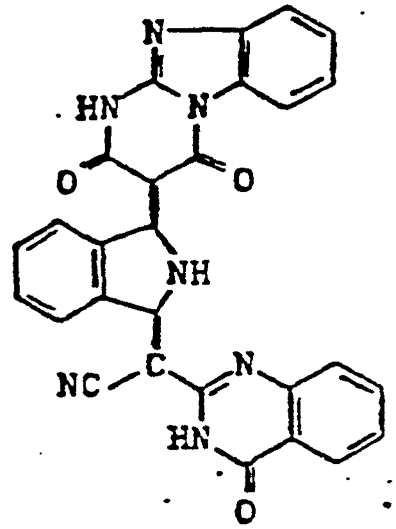

5. An isoindoline dye as claimed in claim 1, of the formula

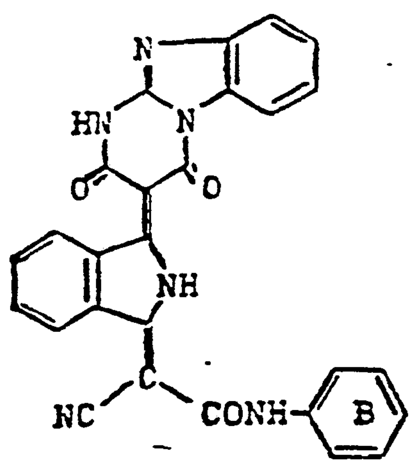

where the ring B is monosubstituted by chlorine.

6. An isoindoline dye as claimed in claim 1, of the formula

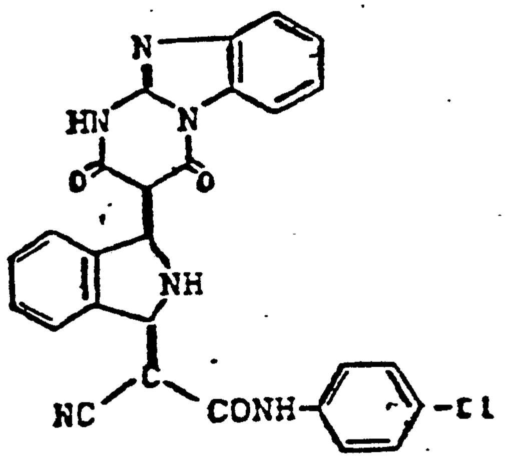

.

7. The use of an isoindoline dye as claimed in claims 1 to 6 for colouring surface coatings, printing inks and plastics.

**Revendications**

1. Colorants de l'isoindoline de formule

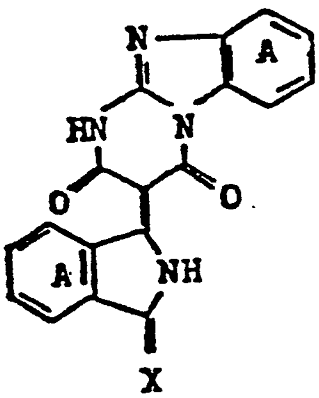

dans laquelle X est mis pour un radical de formule

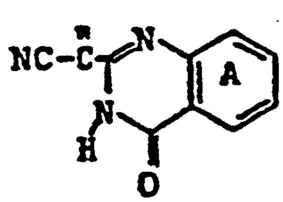

,

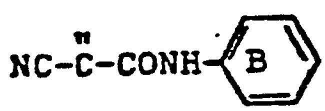

ou

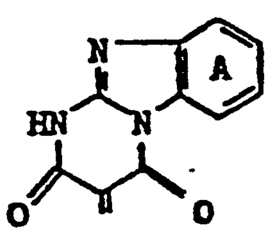

et les noyaux A et B sont non substitués ou substitués par 1 ou 2 atomes de chlore, de brome ou radicaux méthyle, éthyle, méthoxy et/ou éthoxy.

2. Colorants de l'isoindoline selon la revendication 1, caractérisés en ce que les noyaux A sont non substitués.

3. Colorants de l'isoindoline selon la revendication 1 ou 2, caractérisés en ce que X, dans la formule, est mis pour un radical de formule

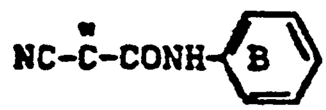

dans laquelle le radical phényle B est substitué par 1 ou 2 atomes de chlore ou radicaux méthyle et, dans le cas de 2 substituants, ceux-ci peuvent être semblables ou différents.

4. Colorants de l'isoindoline selon la revendication 1, caractérisés par la formule

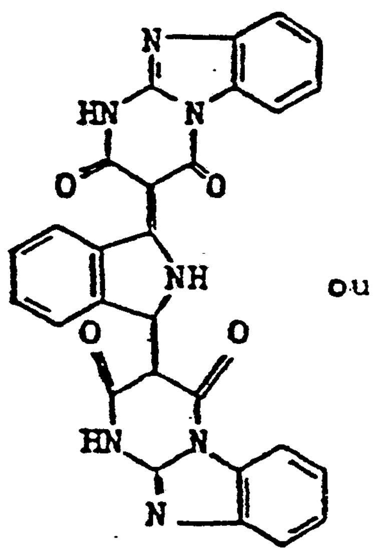

ou

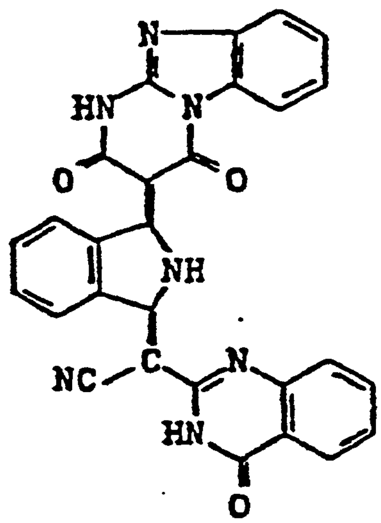

5. Colorants de l'isoindoline selon la revendication 1, caractérisés par la formule

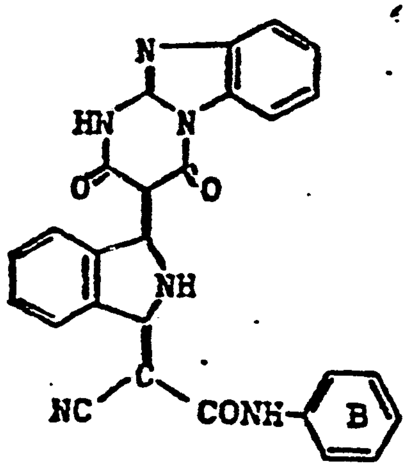

dans laquelle le noyau B est substitué par un atome de chlore.

6. Colorant de l'isoindoline selon la revendication 1, caractérisé par la formule

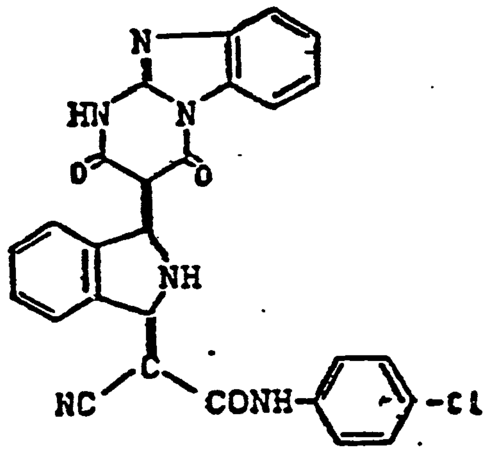

7. Utilisation des colorants de l'isoindoline selon l'une quelconque des revendications 1 à 6 pour la coloration de laques, d'encres d'imprimerie et de matières synthétiques.